(19) Europäisches Patentamt
European Patent Office
Office européen des brevets

(11) Publication number: **0 518 376 A1**

# (12) EUROPEAN PATENT APPLICATION

(21) Application number: **92109954.5**

(51) Int. Cl.$^5$: **G03G 5/06**, C09B 35/039

(22) Date of filing: **12.06.92**

(30) Priority: **13.06.91 JP 167479/91**

(43) Date of publication of application:
**16.12.92 Bulletin 92/51**

(84) Designated Contracting States:
**DE FR GB**

(71) Applicant: **CANON KABUSHIKI KAISHA**
**30-2, 3-chome, Shimomaruko, Ohta-ku**
**Tokyo(JP)**

(72) Inventor: **Kanemaru, Tetsuro, c/o Canon**
**Kabushiki Kaisha**
**3-30-2, Shimomaruko**
**Ohta-ku, Tokyo(JP)**

(74) Representative: **Bühling, Gerhard, Dipl.-Chem. et al**
**Patentanwaltsbüro Tiedtke-Bühling-Kinne & Partner, Bavariaring 4**
**W-8000 München 2(DE)**

## (54) Electrophotographic photosensitive member, an electrophotographic apparatus, an integrated elecrophotographic unit and a facsimile machine having the electrophotographic photosensitive member.

(57) An electrophotographic photosensitive member has an electroconductive substrate and a photosensitive layer thereon, and the photosensitive layer contains a disazo pigment represented by the following formula:

$$A_1\text{-}N{=}N\text{-}Ar_1\text{-}\left(\overset{\overset{\displaystyle Z}{\|}}{C}\text{-}NH\right)_n\text{-}Ar_2\text{-}N{=}N\text{-}A_2$$

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ and $A_2$ are the same or different and are each a coupler residue having a hydroxyl group.

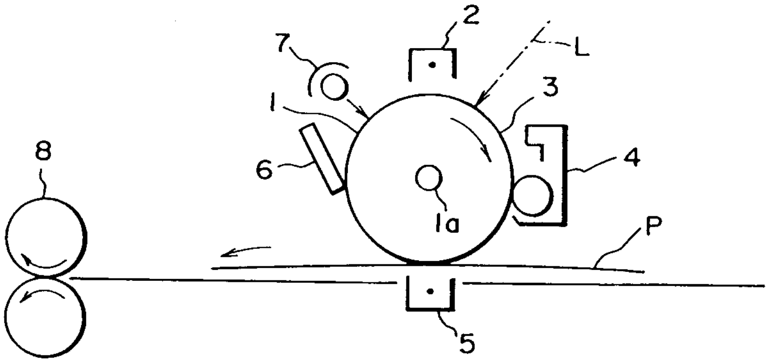


FIG. 1

EP 0 518 376 A1

## BACKGROUND OF THE INVENTION

### Field of the Invention

This invention relates to an electrophotographic photosensitive member and, more particularly, to an electrophotographic photosensitive member having a sensitive layer containing a disazo pigment having a particular structure. This invention also relates to an electrophotographic apparatus, a device unit and a facsimile machine each having the electrophotographic photosensitive member.

### Description of the Prior Art

Conventionally, photoconductive polymers represented by poly-N-vinylcarbazole, low-molecular organic photoconductive materials, e.g., 2,5-bis(p-diethylaminophenyl)-1,3,4-oxadiazole, and combinations of such organic photoconductive materials with various dyestuffs and pigments are known as organic photoconductive materials for electrophotographic photosensitive members. Electrophotographic photosensitive members using organic photoconductive materials are advantageous because they have improved film forming performance and can be produced by coating and can therefore be produced with high productivity and at a comparatively low cost. Also, the color sensitivity can be controlled freely by selecting dyestuffs and pigments to be used. The electrophotographic photosensitive members have therefore been studied widely.

Recently, function separation type photosensitive members have been developed which are laminates of a charge generation layer containing organic photoconductive dyestuffs or pigments, and a charge transport layer containing a photoconductive polymer and a low-molecular weight organic photoconductive material, such as that mentioned above. Photosensitive members of this type are remarkably improved in sensitivity and durability while the conventional organic electrophotographic photosensitive members exhibit unsatisfactory sensitivity and durability.

Azo pigments among the organic photoconductive materials have improved photoconductivity and can be produced comparatively easily as compounds having various characteristics by selecting the appropriate combination of azo components and coupler components. Because of these and other advantages, many azo pigment compounds, e.g., those disclosed in Japanese Patent Laid-Open Nos.S57-138646, S57-202349, and S63-282743, have been proposed.

With the demand for further improvements in sensitivity and durability, electrophotographic photosensitive members having higher sensitivity and capable of stably maintaining electrophotographic characteristics during repeated use are now being studied.

## SUMMARY OF THE INVENTION

An object of the present invention is to provide an electrophotographic photosensitive member having a sensitive layer containing a disazo pigment having a particular structure.

Another object of the present invention is to provide an electrophotographic photosensitive member having high sensitivity and stable potential characteristics.

Yet another object of the present invention is to provide an electrophotographic apparatus, an integrated electrophotographic unit and a facsimile machine each having the electrophotographic photosensitive member.

According to the present invention, there is provided an electrophotographic photosensitive member comprising an electroconductive substrate and a photosensitive layer thereon, the photosensitive layer containing a disazo pigment represented by the following formula (1):

$$A_1-N=N-Ar_1\left(\overset{\overset{\displaystyle Z}{\|}}{C}-NH\right)_n-Ar_2-N=N-A_2 \qquad (1)$$

wherein Z is an oxygen atom or a sulfur atom, $Ar_1$ and $Ar_2$ are the same or different and are each a substituted or unsubstituted bivalent carbocyclic group, or a substituted or unsubstituted bivalent heterocyclic aromatic group, n is 1 or 2, and $A_1$ and $A_2$ are the same or different and are each a coupler residue having a hydroxyl group.

According to the present invention, there are also provided an electrophotographic apparatus, an

integrated electrophotographic unit and a facsimile machine each having the electrophotographic photosensitive member.

## BRIEF DESCRIPTION OF THE DRAWINGS

Fig. 1 is a schematic diagram of the construction of an electrophotographic apparatus having an electrophotographic photosensitive member in accordance with the present invention; and

Fig. 2 is a block diagram of a facsimile machine having the electrophotographic photosensitive member in accordance with the present invention.

## DESCRIPTION OF THE PREFERRED EMBODIMENTS

An electrophotographic photosensitive member in accordance with the present invention has a photosensitive layer containing a disazo pigment represented by the following formula (1):

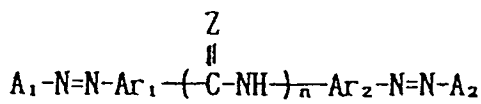

(1)

wherein Z is an oxygen atom or a sulfur atom, and $Ar_1$ and $Ar_2$ are the same or different and are each a substituted or unsubstituted bivalent carbocyclic aromatic group, or a substituted or unsubstituted bivalent heterocyclic aromatic group. Examples of such bivalent carbocyclic aromatic groups and such bivalent heterocyclic aromatic groups are m-phenylene, p-phenylene, 1,8-naphthylene, 1,5-naphthylene, 2,5-pyridinedyl, and 2,5-thiophenedyl.

$A_1$ is a phenolic coupler residue represented by the following formula (2):

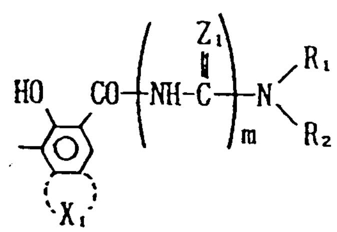

(2)

wherein $X_1$ is a residue necessary for forming a polycyclic aromatic ring or a heterocyclic ring by condensation with the benzene ring in the formula, $Z_1$ is an oxygen atom or a sulfur atom, and $R_1$ and $R_2$ are each a hydrogen atom, a substituted or unsubstituted alkyl group, a substituted or unsubstituted carbocyclic aromatic group or a substituted or unsubstituted heterocyclic aromatic groups. $R_1$ and $R_2$ may be bonded to form a ring with the nitrogen atom in the formula. The suffix m is 1 or 2. $A_2$ is selected from the group consisting of coupler residues represented by the following formulae (3) to (8):

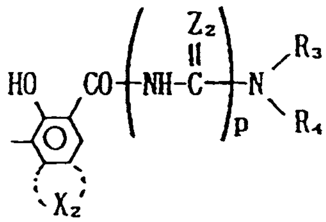

(3)

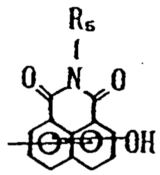

(4)

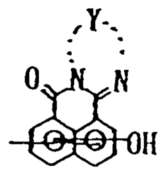

(5)

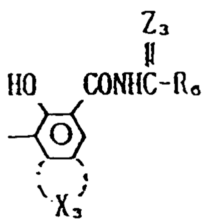

(6)

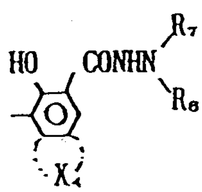

(7)

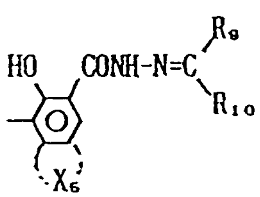

(8)

wherein $X_2$ to $X_5$ are each a residue necessary for forming a polycyclic aromatic ring or a heterocycle by condensation with the benzene ring in the formula, $Z_2$ and $Z_3$ are each an oxygen atom or a sulfur atom, and $R_3$ to $R_{10}$ are each a hydrogen atom, a substituted or unsubstituted alkyl group, a substituted or unsubstituted carbocyclic aromatic group or a substituted or unsubstituted heterocyclic aromatic group. Each of pairs of radicals $R_3$ and $R_4$, $R_7$ and $R_8$ may be bonded to form a ring with the nitrogen atom in the formula, and $R_9$ and $R_{10}$ may be bonded to form a ring with and the carbon atom in the formula. The suffix p is 0, 1 or 2. Y in formula (5) is a substituted or unsubstituted bivalent aromatic hydrocarbon group or a substitutional or unsubstituted bivalent heterocyclic group containing a nitrogen atom.

Examples of the polycyclic aromatic rings or heterocycles selected for $X_1$ to $X_5$ in formulae (2) to (8)

are a naphthalene ring, an anthracene ring, a carbazole ring, a benzocarbazole ring and a dibenzofuran ring. Examples of the alkyl groups selected as $R_1$ to $R_{10}$ are methyl, ethyl, and propyl. Examples of the heterocyclic aromatic groups are pyridyl, thionyl, thiazolyl, carbazolyl, benzoimidazolyl, and benzothiazolyl. Examples of the rings formed by coupling with nitrogen atoms are pyrrole, pyrroline, pyridine, indole, imidazole, pyrazole, pyrazoline, oxazine, and phenoxazine. Examples of the ring formed by coupling with carbon atoms are fluorene, anthraquinone, xanthone, and 1-indanone. Substituents which may be included in these groups and rings are, for example, alkyl groups, such as methyl, ethyl and propyl; halogen atoms, such as fluorine, chlorine, bromine and iodine; acyl groups, such as acetyl and benzil; alkylamino groups, such as dimethylamino and diethylamino; phenylcarbamoyl groups; nitro groups; cyano groups; and haloalkyl groups, such as trifluoromethyl.

Examples of the group selected as Y, i.e., a substituted or unsubstituted bivalent aromatic hydrocarbon group or a bivalent heterocyclic group containing a nitrogen atom are m-phenylene, o-naphthylene, perinaphthylene, 1,2-anthralene, 3,4-pyrazoldyl, 2,3-pyridinedyl, 4,5-pyridinedyl, 6,7-indazoledyl and quinolinedyl. Examples of substitutents thereof are halogen atoms, such as fluorine, chlorine, iodine and bromine; alkyl groups, such as methyl, ethyl and propyl; alkoxy groups, such as methoxy and ethoxy; alkylamino groups, such as dimethylamino and diethylamino; phenylcarbamoyl groups; nitro groups; cyano groups; and haloalkyl groups, such as trifluoromethyl.

If $A_1$ and $A_2$ in formula (1) are as respectively expressed by formula (2) and formulae (3) and (6) to (8), and if $X_1$ to $X_5$ in these formulae are residues capable of forming benzocarbazole rings by condensation with benzene rings, the compound represented by formula (1) is a pigment having an absorption range extending to a near infrared region. An electrophotographic photosensitive member using this pigment is therefore particularly preferred as a photosensitive member suitable for an electrophotographic apparatus using a semiconductor laser as a light source.

Preferred examples of the disazo pigment represented by formula (1) are listed below. However, the disazo pigment used in accordance with the present invention is not limited to these examples. In the following list, the structure of each illustrative pigment is expresse d in such a manner that a basic form is shown first and only changes from the basic form are shown subsequently.

Basic form 1

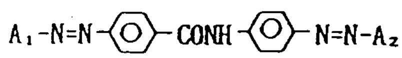

Pigment 1

$A_1$ : 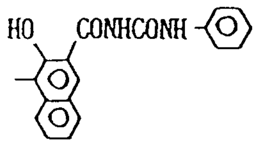

$A_2$ : 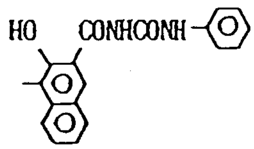

Pigment 2

$A_1$ : 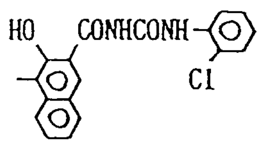

$A_2$ : 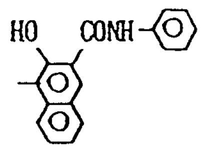

Pigment 3

$A_1$ : 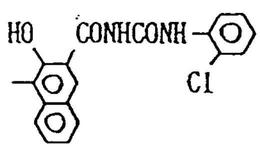

$A_2$ : 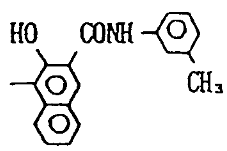

Pigment 4

$A_1$ : 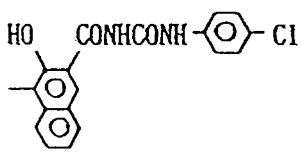

$A_2$ : 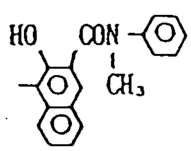

Pigment 5

$A_1$ : 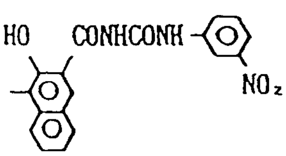

$A_2$ : 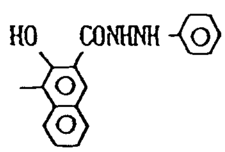

Pigment 6

$A_1$ : 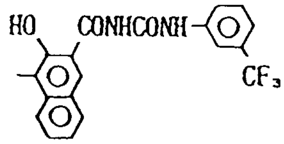 $A_2$ : 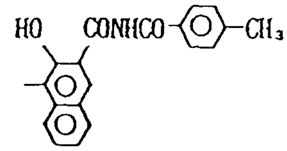

Pigment 7

$A_1$ : 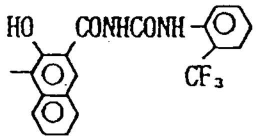 $A_2$ : 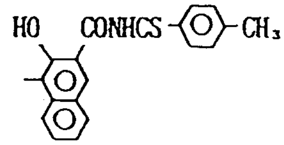

Pigment 8

$A_1$ : 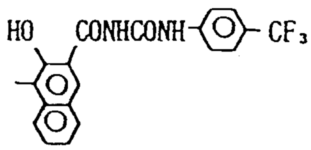 $A_2$ : 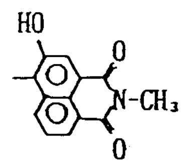

Pigment 9

$A_1$ : 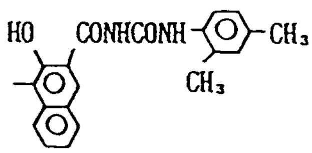 $A_2$ : 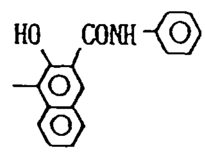

Pigment 10

$A_1$ : 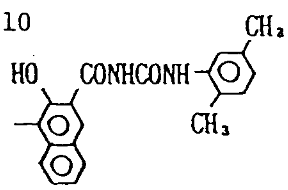 $A_2$ : 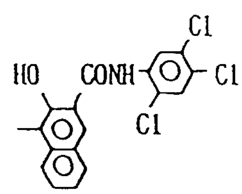

Pigment 11

$A_1$ : 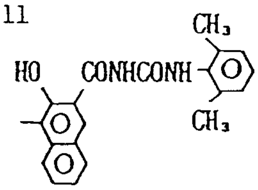

$A_2$ : 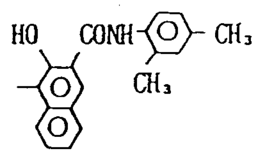

Pigment 12

$A_1$ : 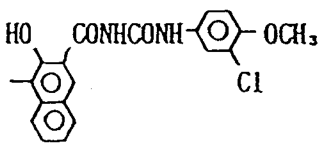

$A_2$ : 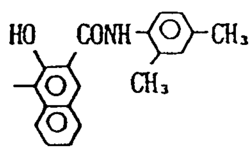

Pigment 13

$A_1$ : 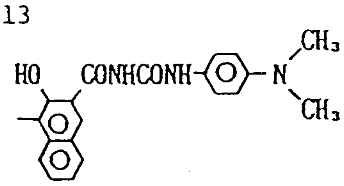

$A_2$ : 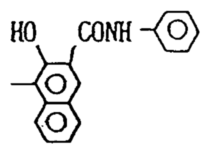

Pigment 14

$A_1$ : 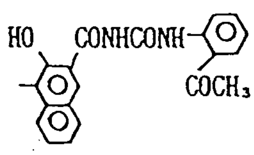

$A_2$ : 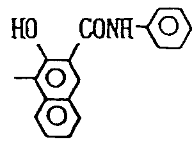

Pigment 15

$A_1$ : 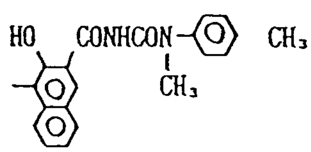

$A_2$ : 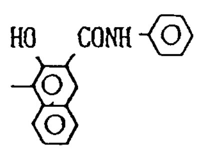

Pigment 16

$A_1$ : 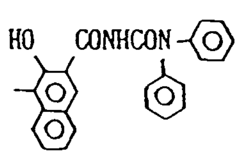

$A_2$ : 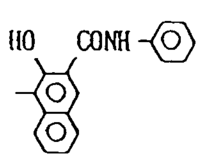

Basic form 2

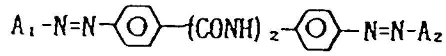

Pigment 17

$A_1$ : 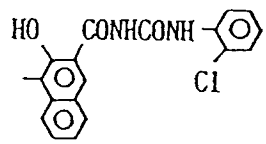

$A_2$ : 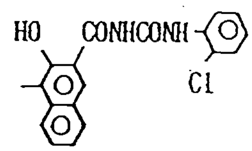

Pigment 18

$A_1$ : 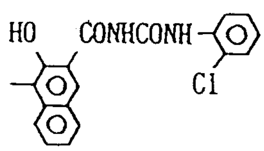

$A_2$ : 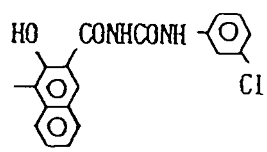

Pigment 19

$A_1$ : 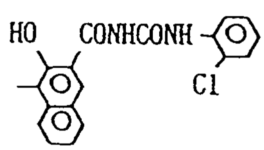

$A_2$ : 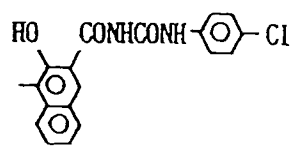

Pigment 20

$A_1$ : 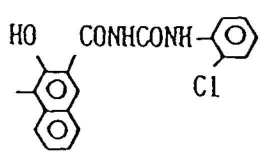

$A_2$ : 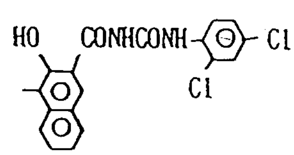

Pigment 21

A₁ : 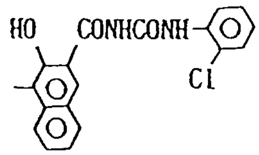

A₂ : 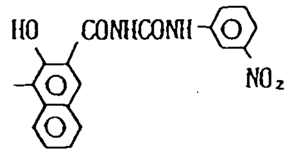

Pigment 22

A₁ : 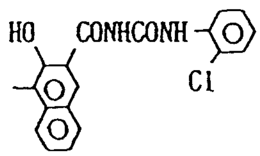

A₂ : 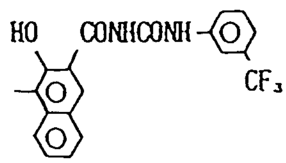

Pigment 23

A₁ : 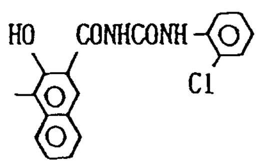

A₂ : 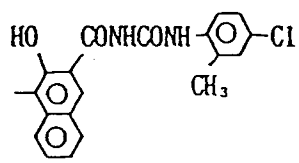

Pigment 24

A₁ : 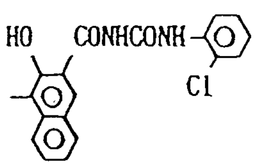

A₂ : 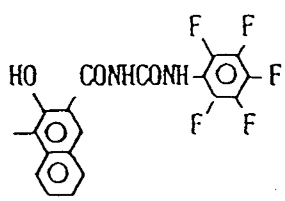

Basic form 3

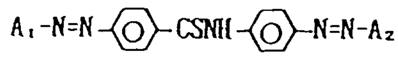

Pigment 25

$A_1$ : 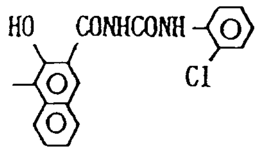

$A_2$ : 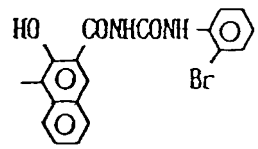

Pigment 26

$A_1$ : 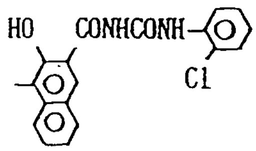

$A_2$ : 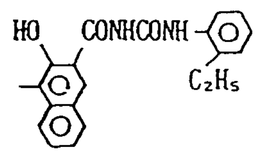

Pigment 27

$A_1$ : 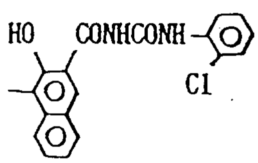

$A_2$ : 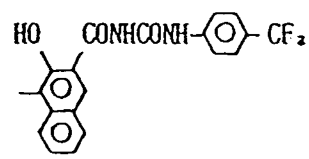

Pigment 28

$A_1$ : 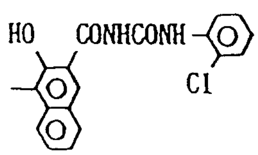

$A_2$ : 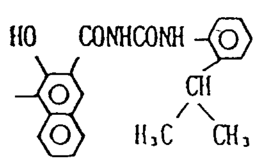

Pigment 29

$A_1$ : 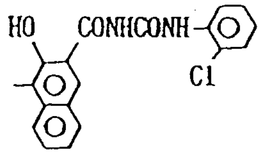

$A_2$ : 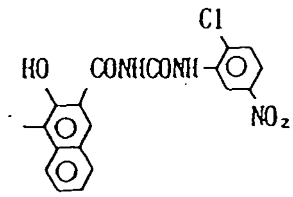

Pigment 30

$A_1$ : 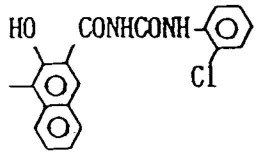

$A_2$ : 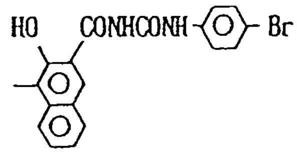

Pigment 31

$A_1$ : 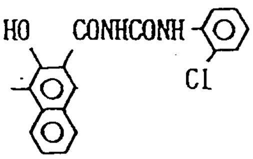

$A_2$ : 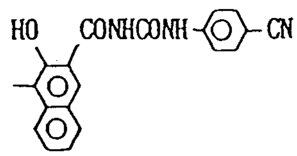

Pigment 33

$A_1$ : 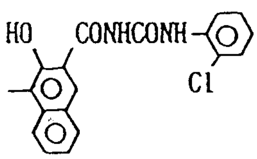

$A_2$ : 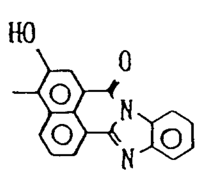

Basic form 4

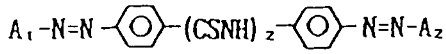

Pigment 33

$A_1$ : 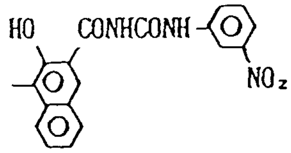

$A_2$ : 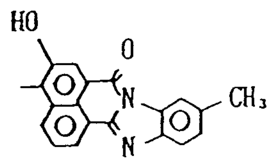

Pigment 34

$A_1$ : 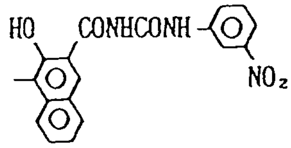

$A_2$ : 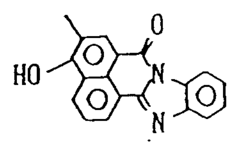

Pigment 35

$A_1$ : 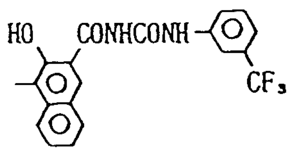

$A_2$ : 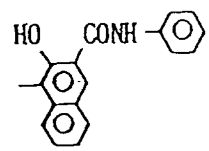

Pigment 36

$A_1$ : 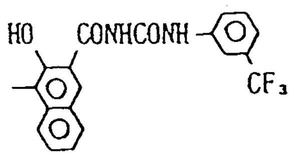

$A_2$ : 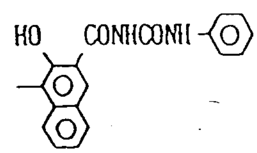

Basic form 5

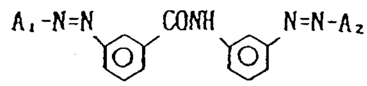

Pigment 37

$A_1$ : 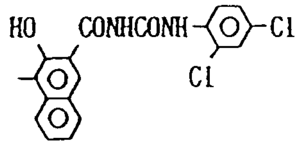 $A_2$ : 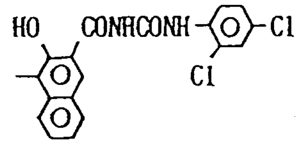

Pigment 38

$A_1$ : 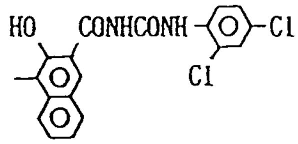 $A_2$ : 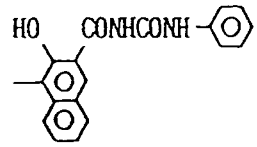

Pigment 39

$A_1$ : 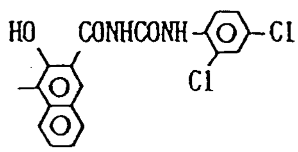 $A_2$ : 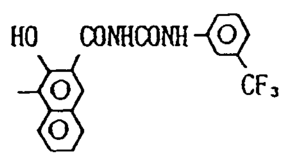

Pigment 40

$A_1$ : 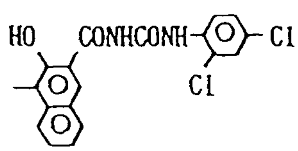 $A_2$ : 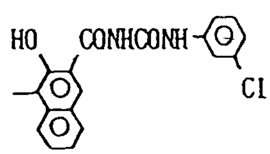

Basic form 6

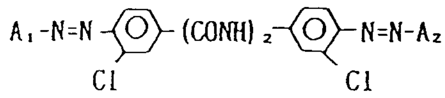

Pigment 41

$A_1$ : 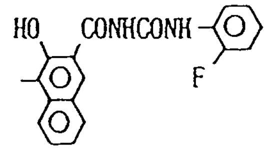

$A_2$ : 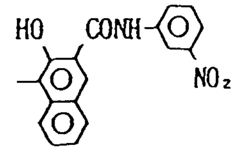

Pigment 42

$A_1$ : 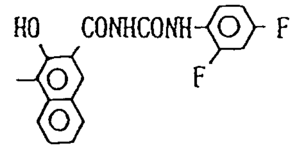

$A_2$ : 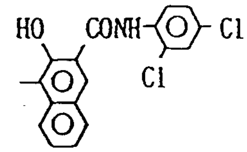

Pigment 43

$A_1$ : 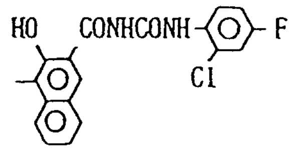

$A_2$ : 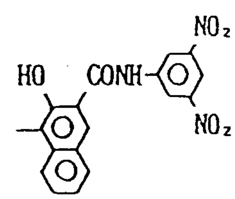

Pigment 44

$A_1$ : 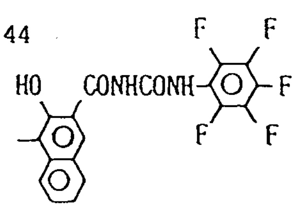

$A_2$ : 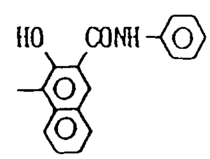

Basic form 7

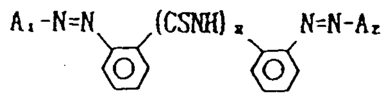

Pigment 45

$A_1$ :

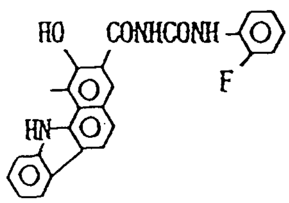

$A_2$ :

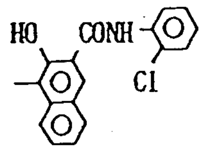

Pigment 46

$A_1$ :

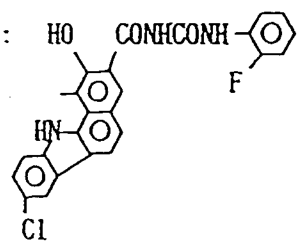

$A_2$ :

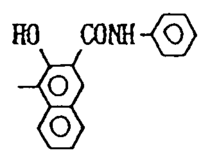

Pigment 47

$A_1$ :

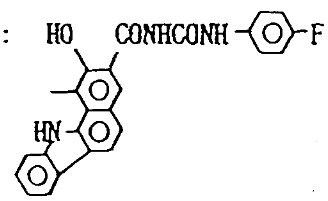

$A_2$ :

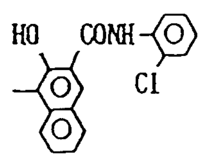

Pigment 48

$A_1$ :

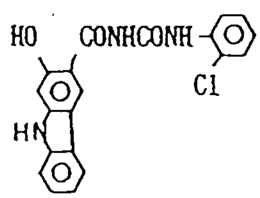

$A_2$ :

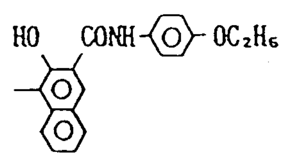

Basic form 8

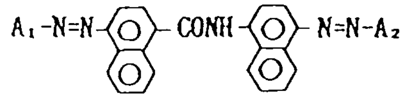

Pigment 49

$A_1$ : 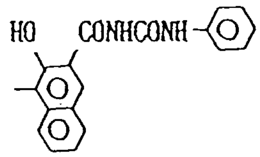

$A_2$ : 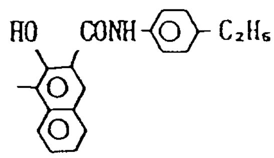

Pigment 50

$A_1$ : 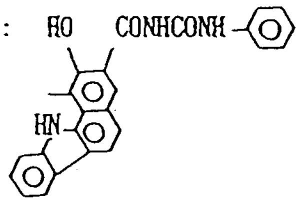

$A_2$ : 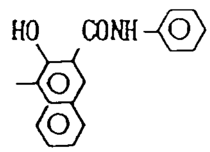

Pigment 51

$A_1$ : 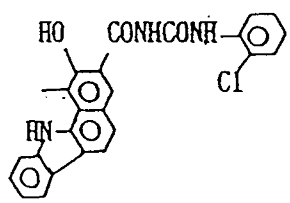

$A_2$ : 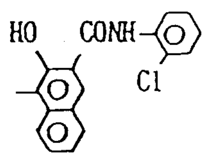

Pigment 52

$A_1$ : 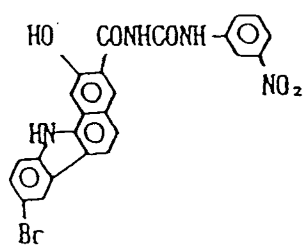

$A_2$ : 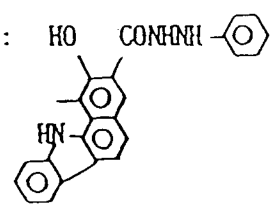

Basic form 9

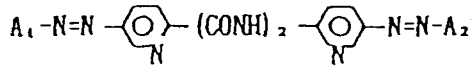

Pigment 53

$A_1$ :

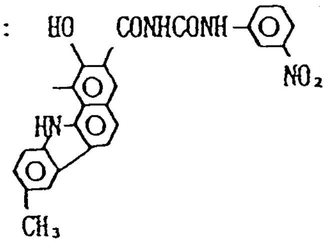

$A_2$ :

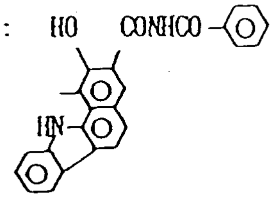

Pigment 54

$A_1$ :

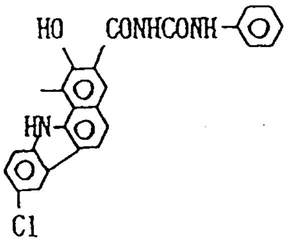

$A_2$ :

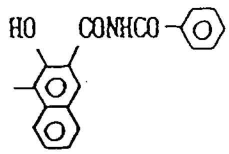

Pigment 55

$A_1$ :

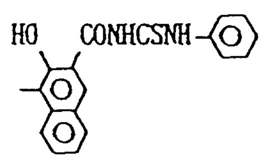

$A_2$ :

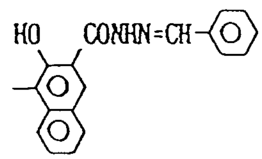

Pigment 56

$A_1$ :

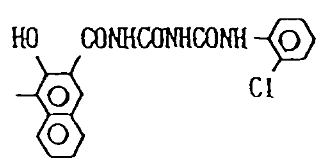

$A_2$ :

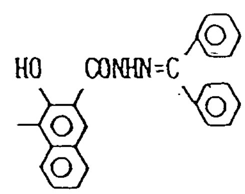

A method of preparing a disazo pigment represented by formula (1) will be described below.

A disazo pigment expressed by formula (1) can easily be synthesized by a process in which a corresponding diamine is tetrazotized by an ordinary method and is then coupled with a coupler in a water solution under the presence of an alkali, or tetrazonium salt. Thereafter the intermediate is changed into a borofluoride salt or a zinc chloride double salt and such salt is coupled with a coupler in an organic solvent

such as N,N-dimethylformamido or dimethyl sulfoxide in the presence of sodium acetate, triethylamine or N-methylmorpholine.

To prepare a disazo pigment having $A_1$ and $A_2$ in formula (1) as different coupler residues, 1 mol of tetrazonium salt mentioned above is coupled with 1 mol of one of the corresponding couplers followed by coupling with 1 mol of the other coupler. Alternatively, a diamine is diazotized for coupling with one of the two couplers, while protecting one of the two amino groups with with acetyl group or the like. The protective group is then hydrolyzed with hydrochloric acid or the like, and diazotation is thereafter effected again for coupling with the other coupler.

Example of Disazo Pigment Synthesis (Synthesis of Example Pigment (1))

150 ml of water and 20 mℓ (0.23 mol) of concentrated hydrochloric acid and 7.3 g (0.32 mol) of a compound expressed by the following formula:

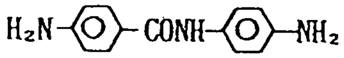

were introduced into in a 300 mℓ beaker and were cooled to 0 ° C. A solution prepared by dissolving 4.6 g (0.067 mol) of sodium nitrite in 10 mℓ of water was introduced dropwise into the former solution for 10 minutes while being maintained at 5 ° C, followed by agitation and carbon filtration. Into this solution, a solution prepared by dissolving 10.5 g (0.096 mol) of sodium borofluoride in 90 mℓ of water was then added dropwise under agitation. A borofluoride salt which precipitated was filtered out, washed with cool water, washed with acetonitrile, and then dried at a reduced pressure and at room temperature. The mount of the salt obtained was 7.8 g and the yield was 75 %.

Next, 500 mℓ of dimethylformamide (DMF) was put in a 1 ℓ beaker, and 12.9 g (0.042 mol) of a compound expressed by the following formula:

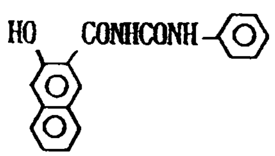

was dissolved therein and the solution was cooled to 5 ° C. Thereafter, 6.6 g (0.020 mol) of the borofluoride salt previously obtained was dissolved and 5.1 g (0.020 mol) of triethylamine was dropwise introduced for 5 minutes, followed by agitation for 2 hours. A pigment which thereby precipitated was filtered out, washed 4 times with DMF and 3 times with water and thereafter freeze-dried. The amount of the pigment obtained was 12.5 g and the yield was 71 %.

The electrophotographic photosensitive member in accordance with the present invention has an electroconductive base a photosensitive layer containing a disazo pigment represented by formula (1) thereon. The photosensitive layer may be provided in any of the well-known forms. However, a function separation type photosensitive layer is specifically preferred in which a charge generation layer containing a disazo pigment expressed by formula (1) and a charge transport layer containing a charge transporting material are laminated together.

A charge generation layer can be formed in such a manner that a liquid prepared by dissolving the above-described disazo pigment and a binder resin in a suitable solvent is applied to a surface of the electroconductive substrate and dried by a conventional method. The charge generation layer in thin, preferably, 5 µm or less, and particularly preferably, 0.1 to 1 µm. The binder resin used to form the layer can be selected from many insulating resins or organic photoconductive polymers, e.g., polyvinyl butyral, polyvinyl benzal, polyarylate, polycarbonate, polyester, phenoxy resin, cellulose resin, acrylic resin and polyurethane. These resins may have substituted groups, such as, alkyl groups, such as methyl, ethyl and propyl; halogen atoms, such as fluorine, chlorine, bromine and iodine; acyl groups, such as acetyl and benzil; alkylamino groups, such as dimethylamino and diethylamino; phenylcarbamoyl groups; nitro groups; cyano groups; and haloalkyl groups, such as trifluoromethyl. The content of the binder resin in the charge transport layer is 80 % or less, preferably, 40 % or less by weight. It is preferable to select the solvent for forming the charge generation layer from a group of solvents which dissolve the above-described resins but

do not dissolve the charge transport layer and an undercoating layer described later. Such solvents are, for example, ethers, such as tetrahydrofuran and 1,4-dioxane; ketones, such as cyclohexane and methyl ethyl ketone; amides, such as N,N-dimethylformamide; esters, such as methyl acetate and ethyl acetate; aromatics, such as toluene, xylene and chlorobenzene; alcohols, such as methanol, ethanol and 2-propanol; and halogen-substituted aliphatic hydrocarbons, such as chloroform, methylene chloride, dichloroethylene, tetrachloromethane and trichloroethylene.

In accordance with the present invention, well-known charge generating materials other than the disazo pigment represented by formula (1) can be used together with the disazo pigment represented by formula (1).

The charge transport layer is formed on or under the charge generation layer and has the function of receiving electric charge carriers from the charge generation layer and transporting them when placed in an electric field. The charge transport layer is formed by dissolving a charge transporting material and a suitable binder resin in a solvent to form a solution and then applying and drying this solution. The thickness of the charge transport layer is preferably 5 to 40 $\mu$m, particularly preferably, 15 to 30 $\mu$m.

Charge transporting materials include electron transporting materials and positive hole transporting materials. Examples of available electron transporting materials are electron attractive materials, such as 2,4,7-trinitrofluorenone, 2,4,5,7-tetranitrofluorenone, chloranil and tetracyanodichloromethane, and compounds polymerized from these electron attractive materials. Examples of available positive hole transporting materials are polycyclic aromatic compounds, such as pyrene and anthracene; heterocyclic compounds, such as carbazole compounds, indole compounds, imidazole compounds, oxazole compounds, thiazole compounds, oxadiazole compounds, pyrazole compounds, pyrazoline compounds, thiadiazole compounds and triazole compounds; hydrazone compounds, such as p-diethylaminobenzaldehyde-N,N-diphenylhydrazone and N,N-diphenylhydrazino-3-methylidene-9-ethylcarbazole; styryl compounds, such as $\alpha$-phenyl-4'-N,N-diphenylaminostilbene and 5-[4-(di-p-tolylamino)benzylidene]-5H-dibenzo[a,d]cycloheptene; benzidine compounds; triarylmethane compounds; triphenylamine compounds; and polymers having groups formed of these compounds as principal or side chains (e.g., poly-N-vinylcarbazole and polyvinyl anthracene).

Inorganic materials, such as selenium, seleniumtellurium, amorphous silicon and cadmium sulfide can also be used as well as the organic charge transporting materials. One of these charge transporting materials or a combination of two or more of them may be used. If the charge transporting material to be used is poor in film-forming performance, a suitable binder may be used. Examples of the binder resin are insulating resins, such as acrylic resin, polyarylate, polyester, polycarbonate, polystyrene, acrylonitrile-styrene copolymer, polyacrylamide, polyamide and chlorinated rubber, and organic photoconductive polymers, such as poly-N-vinylcarbazole and polyvinyl anthracene.

Another example of the electrophotographic photosensitive member in accordance with the present invention is formed in such a manner that the above-described disazo pigment and the above-described charge transporting material are included together in one photosensitive layer by being dispersed and dissolved in the above-described resin. In this case, a charge transporting complex composed of, for example, poly-N-vinylcarbazole and trinitrofluorenone can be used as a charge transporting material. This electrophotographic photosensitive member can be formed by applying and drying a liquid prepared by dispersing the above-described disazo pigment and the above-described charge transporting material in a suitable resin solution. The thickness of this single-layer type photosensitive layer is preferably 5 to 40 $\mu$m, particularly preferably, 15 to 30 $\mu$m.

In either type of electrophotographic photosensitive member, the crystalline form of the disazo pigment represented by formula (1) may be amorphous or crystalline, and two or more of disazo pigments expressed by formula (1) may be combined and may be further combined with a well-known charge generating material to be used.

In accordance with the present invention, a layer of a resin which may contain an electroconductive material can be formed as a protective layer on the photosensitive layer.

The electroconductive substrate used in accordance with the present invention may be formed of, for example, aluminum, an alluminum alloy, copper, zinc, stainless steel, vanadium, molybdenum, chromium, titanium, nickel, indium, gold or platinum. The substrate may be a plastic base formed by vacuum-depositing an electroconductive coating on polyethylene, polypropylene, polyvinyl chloride, polyethylene terephthalate or acrylic resin, a base formed by coating a plastic or metallic member with electroconductive particles (e.g., carbon black or silver particles) and a suitable binder resin, or a base formed by impregnating a plastic or paper sheet with electroconductive particles.

An undercoating layer having a barrier function and an adhesive function may be provided between the electroconductive substrate and the photosensitive layer. Examples of the material of this undercoating

layer are casein, polyvinyl alcohol, nitrocellulose, polyamides (nylon 6, nylon 66, nylon 610, copolymerized nylon, alkoxymethylated nylon and the like), polyurethane, and aluminum oxide. The thickness of the undercoating layer is preferably 5 µm or less, particularly preferably, 0.1 to 3 µm.

The electrophotographic sensitive member in accordance with the present invention can be used widely in the field of applied electrophotography including laser beam printers, CRT printers, LED printers, liquid crystal printers, laser process for printing and facsimile as well as electrophotographic copiers.

Fig. 1 schematically shows the construction of an electrophotographic apparatus using the electrophotographic photosensitive member in accordance with the present invention.

A photosensitive member 1 in the form of a drum used as an image carrier is driven and rotated on a shaft 1a in the direction of the arrow at a predetermined peripheral speed. The photosensitive member 1 is uniformly charged at a predetermined positive or negative voltage at its circumferential surface by a charging means 2 during the rotation and then undergoes, at an exposure section 3, optical image exposure L (slit exposure, laser beam operation exposure or the like) effected by an unillustrated image exposure means. An electrostatic latent image corresponding to the exposure image is thereby formed gradually on a circumferential surface of the photosensitive member.

The electrostatic latent image is toner-developed by a development means 4 and the developed image is transferred successively to a surface of a transfer member P by a transfer means 5 while the transfer member P is being fed from an unillustrated sheet feed section to a position between the sensitive member 1 and the transfer means 5 in synchronization with the rotation of the photosensitive member 1.

Having undergone the image transfer, the transfer sheet P is separated from the sensitive member surface and is led to an image fixation means 8 to undergo image fixation. The transfer sheet P is then discharged as a printed copy out of the apparatus.

From the surface of the photosensitive member 1 after the image transfer, residual toner is removed by a cleaning means 6, and the charge on the surface is then removed by the exposure means 7 to be repeatedly used for image formation.

A corona charge device is ordinarily used as the means 2 for uniformly discharging the photosensitive member 1. Also, a corona transfer means is ordinarily used as the transfer means 5. In this electrophotographic apparatus, two or more of the above-described components including the photosensitive member, the development means and the cleaning means may be integrally combined to form a unit detachable from the apparatus body. For example, at least one, two or all of the charging means, the development means and the cleaning means may be supported integrally with the photosensitive member to form a single unit which is detachably affixed to the apparatus body by using a guide means such as rails on the apparatus body. In this case, the charging means and/or the development means may be constructed on the unit. Similarly, the photosensitive member, the charging means and the cleaning means may be integrated as a unit which is detachable from an electrophotographic apparatus.

If the electrophotographic apparatus is used as a copier or a printer, optical image exposure L is effected in such a manner that the photosensitive member is irradiated with reflection light or transmission light from the original, or a signal is formed by reading the original with a sensor and scanning with a laser beam or driving an LED array or a liquid crystal shutter array is performed in accordance with this signal to to irradiate the photosensitive member with light.

If the electrophotographic apparatus is used as a facsimile printer, optical image exposure L is effected to print received data. Fig. 2 is a block diagram of an example of this application.

A controller 11 controls an image reading part 10 and a printer 19. The whole operation of the controller 11 is controlled by a CPU 17. Read data from the image reading part is transmitted to a terminal on the other end of the line through a transmitting circuit 13. Data received from the terminal on the other end of the line is sent to the printer 19 through a receiving circuit 12. Predetermined image data is stored in an image memory 16. A printer controller 18 controls the printer 19. A telephone 14 is connected to the controller 11.

Image signal received through a circuit 15 (image information from a remote terminal connected through the circuit) is demodulated by the receiving circuit 12. Image information thereby obtained is processed by the CPU 17 in a composite processing manner and is successively stored in the image memory 16. When image information corresponding to at least one page is stored in the memory 16, the corresponding image is recorded. The CPU 17 reads out one-page image information from the memory 16 to form composite one-page image information and sends the same to the printer controller 18. The printer controller 18 controls the printer 19 to record the image in accordance with the one-page image information received from the CPU 17.

The CPU 17 receives information on the next page during the recording effected by the printer 19.

Image receiving/recording is performed in the above-described manner.

Examples 1 to 20

A solution prepared by dissolving 5 g of methoxymethylated nylon (number average molecular weight: 32,000) and 10 g of alcohol-soluble copolymerized nylon (number average molecular weight: 29,000) in 95 g of methanol was applied to a surface of an aluminum base by a Meyer bar to form an undercoating layer so that the thickness of this layer after drying was 1 µm.

Next, 5 g of Pigment No.1 was added to a solution prepared by dissolving 2 g of polyvinyl benzal (the degree of benzalation: 75 % or higher) in 95 g of cyclohexane and was dispersed by operating a sand mill for 21 hours. This dispersion solution was applied to the previously formed undercoating layer surface by a Meyer bar and was dried to form a charge generation layer so that the thickness of this layer after drying was 0.18 µm.

Next, 5 g of a styryl compound represented by the following structural formula:

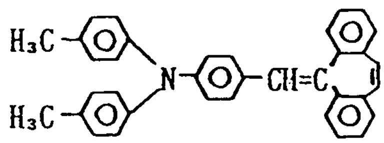

and 5 g of polymethyl methacrylate (number average molecular weight: 100,000) were dissolved in 40 g of chlorobenzene. This solution was applied to the charge generating layer surface by a Meyer bar and was dried to form a charge transport layer so that the thickness of this layer after drying was 20 µm, thereby forming an electrophotographic photosensitive member in accordance with Example 1.

Electrophotographic photosensitive members corresponding to Examples 2 to 20 were formed in the same manner as Example 1 except that pigments shown in Table 1 were used in place of Pigment No.1.

Each electrophotographic photosensitive member was negatively charged by corona discharge at - 5 kV by using an electrostatic copy sheet testing apparatus Model SP-428, a product from Kawaguchi Denki K.K. Thereafter each charged member was maintained in a dark place for 1 sec and thereafter exposed to light from a halogen lamp at an illuminance of 10 lux to evaluate their charging characteristics.

A surface potential ($V_0$) and the amount of exposure (E1/2) necessary for attenuating the surface potential after storing in a dark place to 50 % of the original potential, i.e., sensitivity, were measured as charging characteristics. The results of such measurements are shown in Table 1.

Table 1

| | Pigment No. | Surface potential $V_0$ (-V) | Sensitivity E1/2 (lux•sec) |
|---|---|---|---|
| Example 1 | 1 | 700 | 1.15 |
| 2 | 2 | 700 | 1.20 |
| 3 | 5 | 700 | 1.25 |
| 4 | 8 | 695 | 1.31 |
| 5 | 11 | 700 | 1.29 |
| 6 | 17 | 705 | 0.80 |
| 7 | 18 | 700 | 0.90 |
| 8 | 19 | 705 | 0.92 |
| 9 | 20 | 705 | 0.95 |
| 10 | 25 | 695 | 1.00 |
| 11 | 37 | 700 | 1.08 |
| 12 | 40 | 680 | 1.35 |
| 13 | 44 | 705 | 1.45 |
| 14 | 45 | 700 | 1.29 |
| 15 | 46 | 700 | 1.32 |
| 16 | 48 | 700 | 1.35 |
| 17 | 50 | 705 | 1.45 |
| 18 | 52 | 705 | 1.32 |
| 19 | 55 | 700 | 1.21 |
| 20 | 56 | 700 | 1.31 |

Comparative Examples 1 and 2

Electrophotographic photosensitive members were formed in the same manner as Example 1 except that the following comparative pigments were used in place of the disazo pigment of Example 1, and charging characteristics were evaluated in the same manner.

Comparative pigment 1

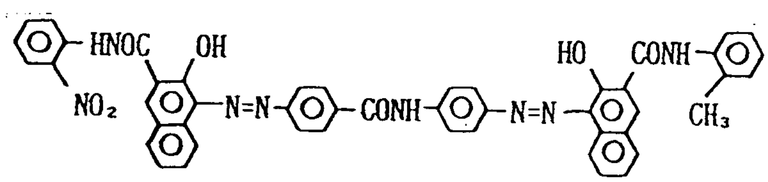

Comparative pigment 2

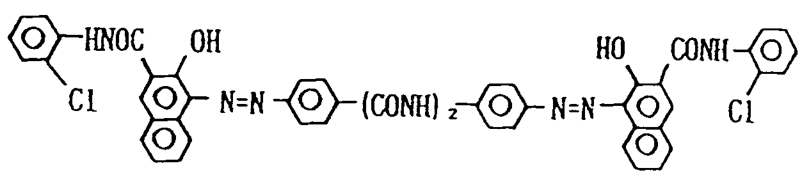

The results of this evaluation are shown in the following Table 2.

Table 2

| | Pigment No. | Surface Potential $V_0$ (-V) | Sensitivity E1/2 (lux•sec) |
|---|---|---|---|
| Comparative Example 1 | Comparative pigment 1 | 705 | 2.80 |
| 2 | Comparative Pigment 2 | 700 | 3.30 |

Examples 21 to 30

The electrophotographic photosensitive member obtained in accordance with Example 1 was attached to a cylinder of an electrophotographic apparatus having a - 6.5 kV corona discharge device, an exposure optical system, a development device, a transfer charging device, a charge removing exposure optical system and a cleaner. An initial dark portion potential $V_D$ and an initial light portion potential $V_L$ were set to about 700 V and -200 V, respectively, and a change $\Delta V_D$ in the dark portion potential and a change $\Delta V_L$ in the light portion potential while the photosensitive member was used 5,000 times were measured. The electrophotographic photosensitive members formed in accordance with Examples 2 to 10 were also evaluated in the same manner. The results are shown in Table 3.

In Table 3, the minus symbol attached to each voltage change value denotes a reduction in the absolute value of the potential, and the plus symbol denotes an increase in the absolute value of the potential.

Comparative Examples 3 and 4

With respect to the electrophotographic photosensitive mediums formed in accordance with Comparative Examples 1 and 2, potential changes during repeated use were measured in the same manner as the method in accordance with Example 21. The results were shown in Table 3.

Table 3

| | Pigment No. | Change in dark portion potential $\Delta V_D$ (V) | Change in light portion potential $\Delta V_L$ (V) |
|---|---|---|---|
| Example 21 | 1 | -5 | +5 |
| 22 | 2 | -5 | 0 |
| 23 | 5 | 0 | 0 |
| 24 | 8 | 0 | 0 |
| 25 | 11 | 0 | 0 |
| 26 | 17 | -10 | +10 |
| 27 | 18 | 0 | +10 |
| 28 | 19 | -10 | +10 |
| 29 | 20 | 0 | +5 |
| 30 | 25 | 0 | 0 |
| Comparative Example 3 | Comparative Pigment 1 | -25 | +60 |
| 4 | Comparative pigment 2 | -40 | +75 |

Example 31

An undercoating layer of polyvinyl alcohol having a thickness of 0.5 µm was formed on an aluminum surface of a polyethylene terephthalate film having a vacuum-deposited aluminum layer. A dispersion solution prepared in the same manner as Example 1 by adding 5 g of Pigment No.17 to a solution consisting of 95 g of cyclohexane and 2 g of a butyral resin (the degree of butylation: 65 molar %) dissolved in cyclohexane was applied and dried to form a charge generation layer having a thickness of 0.2 µm.

Next, 5 g of a hydrazone compound represented by the following structural formula:

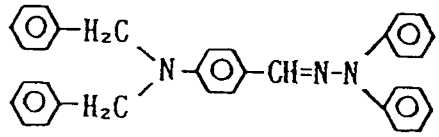

and 5 g of polycarbonate (number average molecular weight: 55,000) were dissolved in 40 g of tetrahydrofuran. This solution was applied to the charge generating layer surface and dried to form a charge transport layer having a thickness of 20 μm. Charging characteristics and durability of an electrophotographic photosensitive member thereby formed were measured by the same method as Example 1. The results were as follows:

$V_0$: -720 V, E1/2: 1.22 lux•sec

$\Delta V_D$: -10 V, $\Delta V_L$: 0 V

Example 32

An undercoating layer of polyvinyl alcohol having a thickness of 0.5 μm was formed on an aluminum surface of a polyethylene terephthalate film having a vacuum-deposited aluminum layer. A dispersion solution prepared in the same manner as Example 1 by adding 5 g of Pigment No.18 to a solution consisting of 95 g of tetrahydrofuran and 2 g of poly-p-fluorovinyl benzal (the degree of butylation: 65 % or higher) dissolved in tetrahydrofuran was applied and dried to form a charge generation layer having a thickness of 0.2 μm.

Next, 5 g of a triallylamine compound represented by the following structural formula:

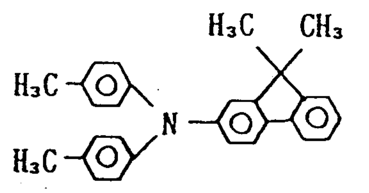

and 5 g of polycarbonate (number average molecular weight: 55,000) were dissolved in 40 g of chlorobenzene. This solution was applied to the charge generating layer surface and dried to form a charge transport layer having a thickness of 20 μm. Charging characteristics and durability of an electrophotographic photosensitive member thereby formed were measured by the same method as Example 1. The results were as follows:

$V_0$: -705 V, E1/2: 1.32 lux•sec

$\Delta V_D$: 0 V, $\Delta V_L$: +5 V

Example 33

An electrophotographic photosensitive member was formed in such a manner that the charge generation layer and the charge transport layer of the electrophotographic photosensitive member in accordance with Example 2 were formed in the reverse order. Charging characteristics and durability of this electrophotographic photosensitive member were measured by the same method as Example 1 except that charging was positive charging. The results were as follows:

$V_0$: +700 V, E1/2: 1.65 lux•sec

Example 34

A solution prepared by dissolving 4.5 g of 2,4,7-trinitro-9-fluorenone and 5 g of poly-4,4'-dioxydiphenyl-2,2-propanecarbonate (number average molecular weight: 300,000) in 50 g of tetrahydrofuran was applied to the surface of the same charge generation layer as Example 3 with a Meyer bar and was dried to form a charge transport layer so that the thickness of this layer after drying was 19 μm. Charging characteristics of an electrophotographic photosensitive member thereby obtained were evaluated by the same method as Example 1 except that charging was positive charging. The results were as follows:

$V_0$: +705 V, E1/2: 4.05 lux•sec

Example 35

0.5 g of Pigment No.3 and 9.5 g of cyclohexane were dispersed by operating a paint shaker for 5 hours. To this liquid was added a solution prepared by dissolving 5 g of the same charge transport material as that used in Example 1 and 5 g of polycarbonate in 40 g of tetrahydrofuran, followed by shaking for 1 hour. The solution prepared in this manner was applied to a surface of an aluminum base with a Meyer bar and dried to form a photosensitive layer having a thickness of 21 $\mu$m. Charging characteristics of an electrophotographic photosensitive member thereby obtained were evaluated by the same method as Example 1 except that charging was positive charging. The results were as follows:

$V_0$: +700 V, E1/2: 5.10 lux•sec

In the electrophotographic photosensitive member in accordance with the present invention, a disazo pigment having a particular structure is used as a material of a photosensitive layer. One of or both the efficiencies of generation and injection of charge carriers in the photosensitive layer are thereby improved, so that the sensitivity and the potential stability during repeated use can be improved. This electrophotographic photosensitive member can be used effectively when applied to an electrophotographic apparatus, an integrated electrophotographic unit or a facsimile machine.

An electrophotographic photosensitive member has an electroconductive substrate and a photosensitive layer thereon, and the photosensitive layer contains a disazo pigment represented by the following formula:

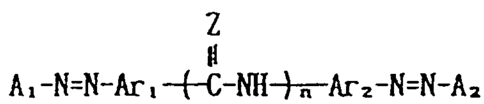

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ and $A_2$ are the same or different and are each a coupler residue having a hydroxyl group.

**Claims**

**1.** An electrophotographic photosensitive member comprising an electroconductive substrate and a photosensitive layer thereon, said photosensitive layer containing a disazo pigment represented by the following formula (1):

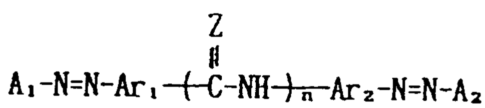

(1)

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ is a coupler residue represented by the following formula (2):

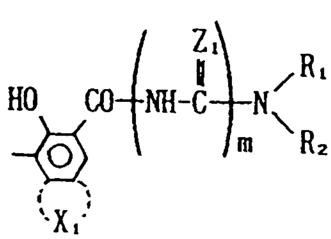

(2)

wherein $X_1$ is a residue necessary for forming a polycyclic aromatic ring or a heterocyclic ring by condensation with the benzene ring in the formula, $Z_1$ is an oxygen atom or a sulfur atom, $R_1$ and $R_2$ are each a hydrogen atom, a substituted or unsubstituted alkyl group, a substituted or unsubstituted carbocyclic aromatic group or a substituted or unsubstituted heterocyclic aromatic group or $R_1$ and $R_2$ are bonded to form a ring with the nitrogen atom in said formula (2) and m is 1 or 2; and $A_2$ is selected from the group consisting of coupler residues represented by the following formulae (3) to (8):

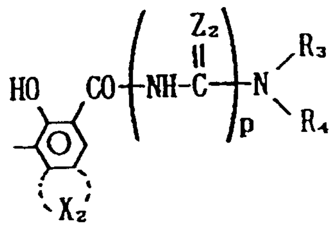

(3)

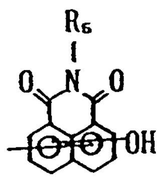

(4)

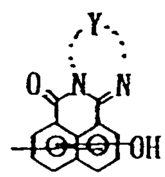

(5)

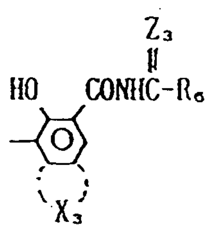

(6)

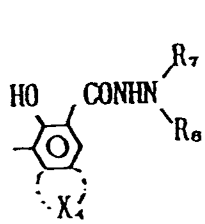

(7)

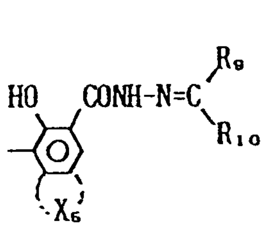

(8)

wherein $X_2$ to $X_5$ are each a residue necessary for forming a polycyclic aromatic ring or a heterocyclic

ring by condensation with the benzene ring in the formula, $Z_2$ and $Z_3$ are each an oxygen atom or a sulfur atom, $R_3$ to $R_{10}$ are each a hydrogen atom, a substituted or unsubstituted alkyl group, a substituted or unsubstituted carbocyclic aromatic group or a substituted or unsubstituted heterocyclic aromatic group or each of ($R_3$ and $R_4$) and ($R_7$ and $R_8$) are bonded to form a ring with the nitrogen atom in the formula, and $R_9$ and $R_{10}$ are bonded to form a ring with the carbon atom in the formula; p is 0, 1 or 2, and Y is a substituted or unsubstituted bivalent aromatic hydrocarbon group or a substituted or unsubstituted bivalent heterocyclic group containing a nitrogen atom.

**2.** An electrophotographic photosensitive member according to claim 1, wherein $A_1$ is a coupler residue represented by formula (2), and $A_2$ is is a coupler residue represented by one of formulae selected from the group consisting of formulae (3), (6), (7), and (8).

**3.** An electrophotographic photosensitive member according to claim 2, wherein $X_1$ in formula (2) and $X_2$ to $X_5$ in formulae (3), (6), (7), and (8) are each a residue for forming a benzocarbazole ring by condensation with the benzene ring in the formula.

**4.** An electrophotographic photosensitive member according to claim 1, wherein said photosensitive layer contains the compound expressed by formula (1) as a charge generating material.

**5.** An electrophotographic photosensitive member according to claim 1, wherein said photosensitive layer comprises a charge generation layer and a charge transport layer.

**6.** An electrophotographic photosensitive member according to claim 5, wherein said photosensitive layer comprises, in sequence, an electroconductive substrate, a charge generation layer and a charge transport layer.

**7.** An electrophotographic photosensitive member according to claim 5, wherein said electrophotographic photosensitive member comprises in sequence an electroconductive substrate, a charge transport layer and a charge generation layer.

**8.** An electrophotographic photosensitive member according to claim 1, wherein said photosensitive layer is a single layer.

**9.** An electrophotographic photosensitive member according to claim 1, wherein said electrophotographic photosensitive member has an undercoating layer between the electroconductive substrate and the photosensitive layer.

**10.** An electrophotographic photosensitive member according to claim 1, wherein said electrophotographic photosensitive member has a protective layer on the photosensitive layer.

**11.** An electrophotographic apparatus comprising:

an electrophotographic photosensitive member;

means for forming an electrostatic latent image;

means for developing the formed electrostatic latent image; and

means for transferring the developed image onto a transfer material;

said electrophotographic photosensitive member comprising an electroconductive substrate and a photosensitive layer thereon, said photosensitive layer containing a disazo pigment represented by the following formula (1):

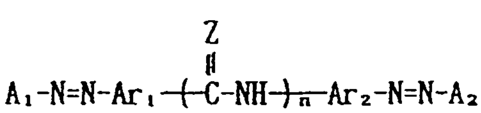

(1)

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ is a coupler residue represented by the following

formula (2):

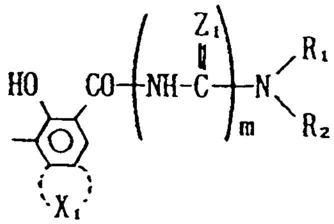

(2)

wherein $X_1$ is a residue necessary for forming a polycyclic aromatic ring or a heterocyclic ring by condensation with the benzene ring in the formula, $Z_1$ is an oxygen atom or a sulfur atom, $R_1$ and $R_2$ are each a hydrogen atom, a substituted or unsubstituted alkyl group, a substituted or unsubstituted carbocyclic aromatic group or a substituted or unsubstituted heterocyclic aromatic group or $R_1$ and $R_2$ are bonded to form a ring with the nitrogen atom in each formula (2) and m is 1 or 2; and $A_2$ is selected from the group consisting of coupler residues represented by the following formulae (3) to (8):

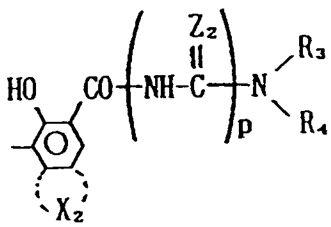

(3)

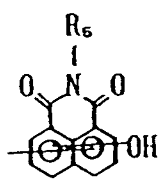

(4)

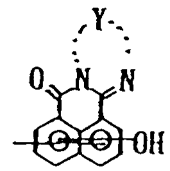

(5)

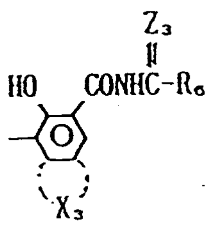

(6)

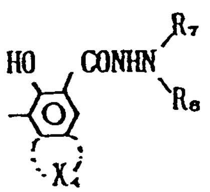

(7)

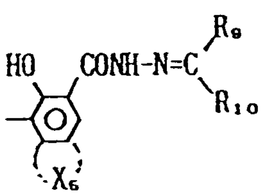

(8)

wherein $X_2$ to $X_5$ are each a residue necessary for forming a polycyclic aromatic ring or a heterocyclic ring by condensation with the benzene ring in the formula, $Z_2$ and $Z_3$ are each an oxygen atom or a sulfur atom, $R_3$ to $R_{10}$ are each a hydrogen atom, a substituted or unsubstituted alkyl group, a substituted or unsubstituted carbocyclic aromatic group or a substituted or unsubstituted heterocyclic aromatic group or each of ($R_3$ and $R_4$) and ($R_7$ and $R_8$) are bonded to form a ring with the nitrogen atom in the formula, and $R_9$ and $R_{10}$ are bonded to form a ring with the carbon atom in the formula; p is 0, 1 or 2, and Y is a substituted or unsubstituted bivalent aromatic hydrocarbon group or a substituted or unsubstituted bivalent heterocyclic group containing a nitrogen atom.

**12.** An integrated electrophotographic unit comprising:
(a) an electrophotographic photosensitive member;
(b) charging means; and
(c) cleaning means; means for forming an electrostatic latent image;
said electrophotographic photosensitive member comprising an electroconductive substrate and a photosensitive layer thereon, said photosensitive layer containing a disazo pigment represented by the following formula (1):

$$A_1-N=N-Ar_1-(\overset{Z}{\overset{\|}{C}}-NH)_n-Ar_2-N=N-A_2 \qquad (1)$$

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ is a coupler residue represented by the following

formula (2):

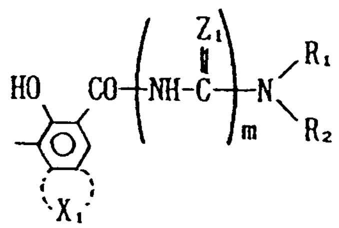

(2)

wherein $X_1$ is a residue necessary for forming a polycyclic aromatic ring or a heterocyclic ring by condensation with the benzene ring in the formula, $Z_1$ is an oxygen atom or a sulfur atom, $R_1$ and $R_2$ are each a hydrogen atom, a substituted or unsubstituted alkyl group, a substituted or unsubstituted carbocyclic aromatic group or a substituted or unsubstituted heterocyclic aromatic group or $R_1$ and $R_2$ are bonded to form a ring with the nitrogen atom in said formula (2) and m is 1 or 2; and $A_2$ is selected from the group consisting of coupler residues represented by the following formulae (3) to (8):

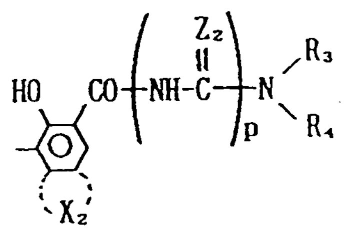

(3)

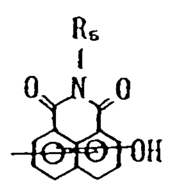

(4)

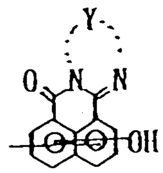

(5)

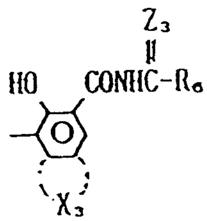

(6)

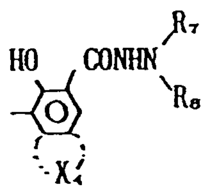

(7)

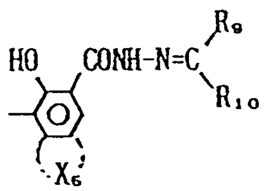

(8)

wherein $X_2$ to $X_5$ are each a residue necessary for forming a polycyclic aromatic ring or a heterocyclic ring by condensation with the benzene ring in the formula, $Z_2$ and $Z_3$ are each an oxygen atom or a sulfur atom, $R_3$ to $R_{10}$ are each a hydrogen atom, a substituted or unsubstituted alkyl group, a substituted or unsubstituted carbocyclic aromatic group or a substituted or unsubstituted heterocyclic aromatic group or each of ($R_3$ and $R_4$) and ($R_7$ and $R_8$) are bonded to form a ring with the nitrogen atom in the formula, and $R_9$ and $R_{10}$ are bonded to form a ring with the carbon atom in the formula; p is 0, 1 or 2, and Y is a substituted or unsubstituted bivalent aromatic hydrocarbon group or a substituted or unsubstituted bivalent heterocyclic group containing a nitrogen atom;

said integrated electrophotographic unit being detachably mounted to a body of an apparatus.

**13.** An integrated electrophotographic unit according to claim 12, wherein the integrated electrophotographic unit comprises development means for developing a latent image on the electrophotographic photosensitive member.

**14.** A facsimile machine comprising:

an electrophotographic apparatus; and

receiving means for receiving image information from a remote terminal;

said electrophotographic apparatus having an electrophotographic photosensitive member;

said electrophotographic photosensitive member comprising an electroconductive substrate and a photosensitive layer thereon, said photosensitive layer containing a disazo pigment represented by the following formula (1):

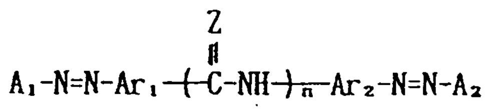

(1)

where Z is an oxygen atom or a sulfur atom, $Ar_1$ and $Ar_2$ are the same or different and are each a substituted or unsubstituted bivalent carbocyclic group or a substituted or unsubstituted bivalent heterocyclic aromatic group, n is 1 or 2, and $A_1$ is a coupler residue represented by the following formula (2):

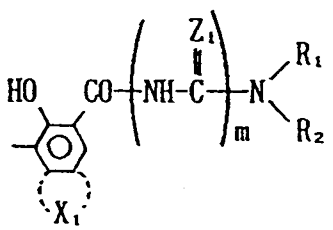

(2)

wherein $X_1$ is a residue necessary for forming a polycyclic aromatic ring or a heterocyclic ring by condensation with the benzene ring in the formula, $Z_1$ is an oxygen atom or a sulfur atom, $R_1$ and $R_2$ are each a hydrogen atom, a substituted or unsubstituted alkyl group, a substituted or unsubstituted carbocyclic aromatic group or a substituted or unsubstituted heterocyclic aromatic group or $R_1$ and $R_2$ are bonded to form a ring with the nitrogen atom in said formula (2) and m is 1 or 2; and $A_2$ is selected from the group consisting of coupler residues represented by the following formulae (3) to (8):

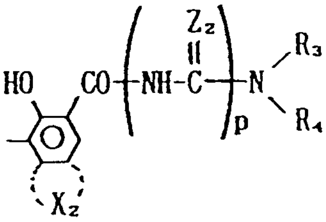

(3)

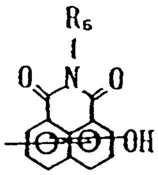

(4)

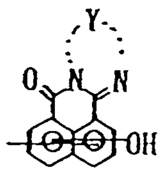

(5)

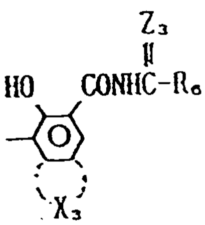

(6)

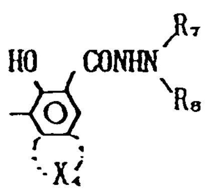

(7)

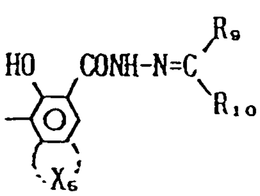

(8)

wherein $X_2$ to $X_5$ are each a residue necessary for forming a polycyclic aromatic ring or a heterocyclic ring by condensation with the benzene ring in the formula, $Z_2$ and $Z_3$ are each an oxygen atom or a sulfur atom, $R_3$ to $R_{10}$ are each a hydrogen atom, a substituted or unsubstituted alkyl group, a substituted or unsubstituted carbocyclic aromatic group or a substituted or unsubstituted heterocyclic aromatic group or each of ($R_3$ and $R_4$) and ($R_7$ and $R_8$) are bonded to form a ring with the nitrogen atom in the formula, and $R_9$ and $R_{10}$ are bonded to form a ring with the carbon atom in the formula; p is 0, 1 or 2, and Y is a substituted or unsubstituted bivalent aromatic hydrocarbon group or a substituted or unsubstituted bivalent heterocyclic group containing a nitrogen atom.

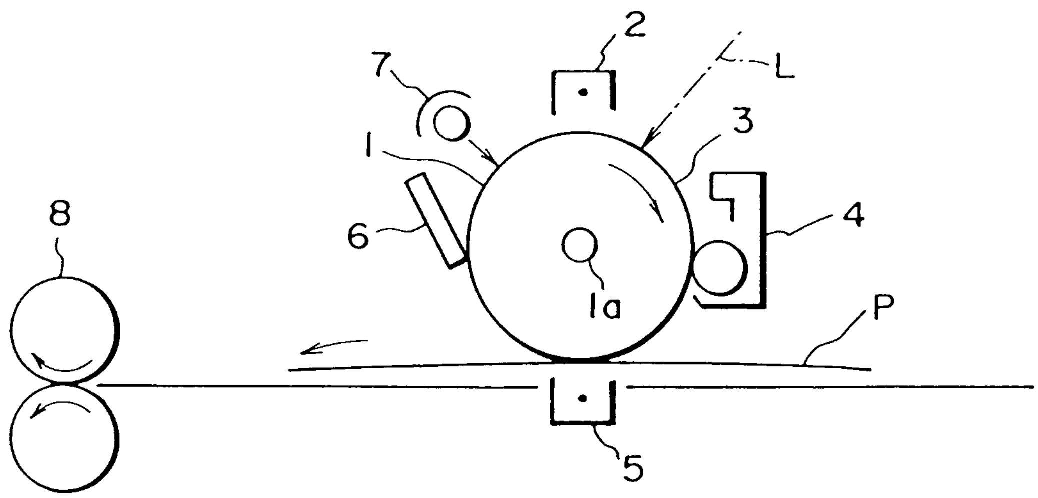
2
7
L
3
1
8
6
4
1a
P
5

FIG. 1

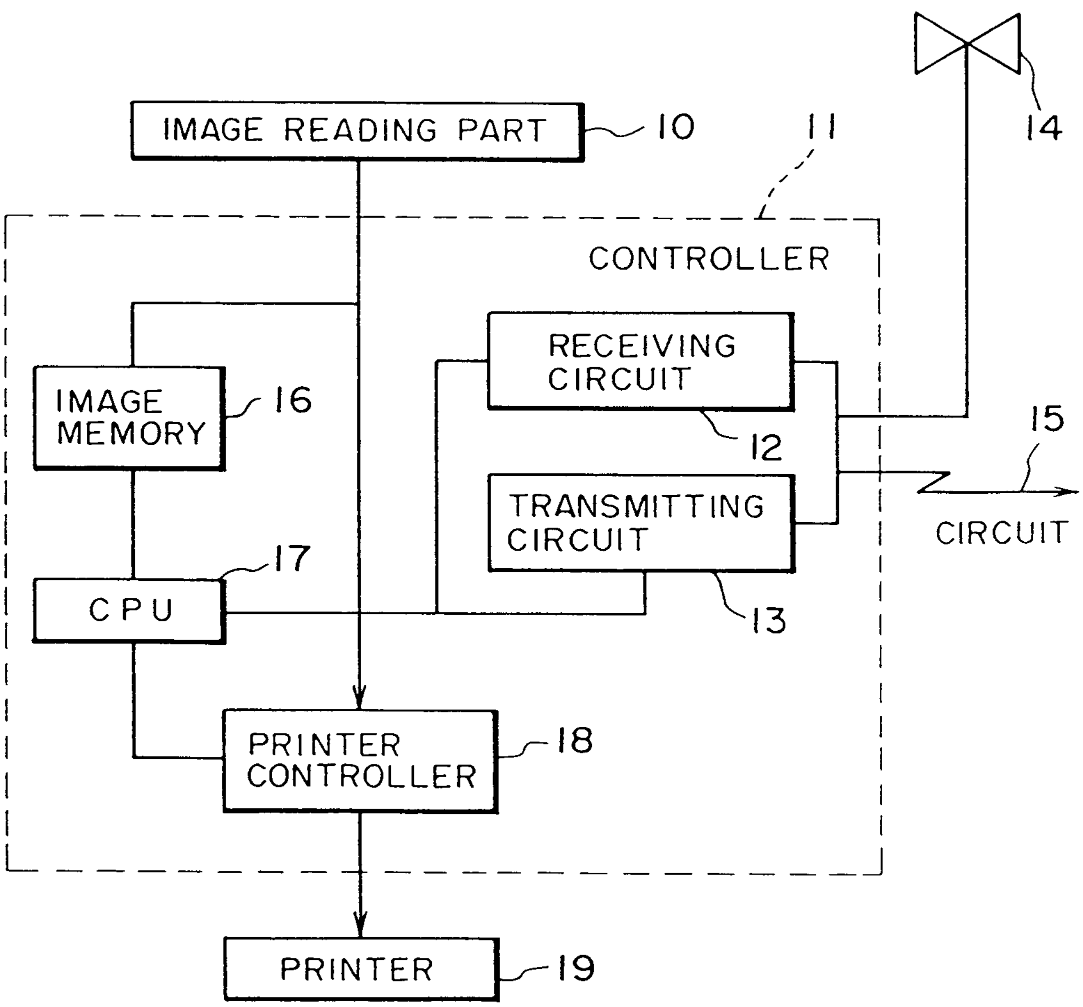
IMAGE READING PART
10
11
14
CONTROLLER
RECEIVING CIRCUIT
IMAGE MEMORY
16
12
15
TRANSMITTING CIRCUIT
CIRCUIT
17
CPU
13
PRINTER CONTROLLER
18
PRINTER
19

FIG. 2

European Patent Office

# EUROPEAN SEARCH REPORT

Application Number

EP 92 10 9954

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | JP-A-1 180 555 (CANON)<br><br>* page 587, column 1, paragraph 1 - page 589, column 2, paragraph 1 *<br>* page 590 - page 592; examples 7,9,16,23,28 * | 1-3<br>4-14 | G03G5/06<br>C09B35/039 |
| X | & PATENT ABSTRACTS OF JAPAN<br>vol. 13, no. 464 (P-947)(3812) 20 October 1989<br>& JP-A-1 180 555 ( CANON ) 18 July 1989<br>* abstract *<br>--- | 1-3 | |
| X | JP-A-2 054 275 (CANON)<br>* page 843, column 1, paragraph 1 - page 846, column 2, paragraph 1 *<br>* page 846 - page 848; examples 3,6,10,13 * | 1-3 | |
| X | & PATENT ABSTRACTS OF JAPAN<br>vol. 14, no. 226 (P-1047)(4169) 14 May 1990<br>& JP-A-2 054 275 ( CANON ) 23 February 1990<br>* abstract *<br>--- | 1-3 | |
| Y | EP-A-0 428 102 (CANON)<br>* claims 7,12,22 *<br>--- | 11-14 | **TECHNICAL FIELDS SEARCHED (Int. Cl.5 )** |
| Y | FR-A-2 607 942 (CANON)<br>* page 63, line 22 - page 73, line 28 *<br>----- | 4-10 | G03G |

The present search report has been drawn up for all claims

| Place of search | Date of completion of the search | Examiner |
|---|---|---|
| THE HAGUE | 04 SEPTEMBER 1992 | VANHECKE H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document